# EUROPEAN PATENT APPLICATION

(11) **EP 2 433 914 A1**
(43) Date of publication of application: **28.03.2012**
(21) Application number: 09844777.4
(22) Date of filing: 19.05.2009
(51) Int. Cl.: C03C 3/095

(54) **RARE EARTH ION DOPED SILICATE LUMINESCENCE GLASS AND PREPARATION METHOD THEREOF**

(71) Applicant: Ocean's King Lighting Science&Technology Co., Ltd., Guangdong 518052 (CN)
(72) Inventor: ZHOU, Mingjie, Guangdong 518052 (CN); MA, Wenbo, Guangdong 518052 (CN); SHI, Zhaopu, Guangdong 518052 (CN); QIAO, Yanbo, Guangdong 518052 (CN); LI, Qingtao, Guangdong 518052 (CN)
(74) Representative: Bird Goën & Co
(86) International application number: PCT/CN2009/071852
(87) International publication number: WO 2010/133025

(57) **Abstract**

A rare earth ion doped silicate luminescence glass and preparation method thereof are provided. The luminescence glass is the material with the following formula: aM₂O·bM'₂O₃·cSiO₂·dRE₂O₃, wherein M is at least one of Na, K and Li, M' is at least one of Y, Gd, La, Sc and Lu, RE is at least one of Ce, Tm, Tb, Ho, Dy, Er, Nd, Sm, Eu and Pr. The preparation method is: grinding the raw material until mixed uniformly, calcining the raw material at 1200-1500 °C for 1-5 h, cooling to room temperature, annealing at 600-1100 °C for 0.5-24 h, cooling to room temperature again, molding then getting the product. The performance of the product is stable. The product is homogenous, and the luminescence performance is good. The light transmittance is high. The process of the preparation method is simple and with low cost.

## Description

### FIELD OF THE INVENTION

The present invention belongs to the technical field of luminescence material, and relates to a luminescence glass and preparation method thereof, more particularly, to a rare earth ion doped silicate luminescence glass and preparation method thereof.

### BACKGROUND OF THE INVENTION

With the development of semiconductor lighting technology (LED), such new light source has come into our daily life gradually. When the third generation semiconductor material gallium nitride is used as the semiconductor lighting source, its power consumption is only one-tenth of that of a common incandescent lamp under the same brightness; its lifetime can reach more than 1 million hours as well. As a new-type lighting technology, LED can be applied into varieties of fields such as indication, display, decoration, backlight and general lighting due to its numerous advantages including energy conservation, green environmental protection and flexible application etc., which is to bring about a revolution in the lighting field.

At present, most commercial white light LED lighting devices are realized by the cooperation between blue light LED chips and fluorescent powders which are capable of emitting yellow or green-orange light when excited by blue light. Such kind of fluorescent powder has higher luminous efficiency and matured preparation method. However, the light source devices manufactured by this method has the following drawbacks: (1) the epoxy resin for encapsulation ages easily, thus reducing the device lifetime; (2) its process is complex and cost is high; (3) the color coordinate is unstable and the white light is easy to drift.

### SUMMARY OF THE INVENTION

The objective of the present invention is to provide a rare earth ion doped silicate luminescence glass which has good stability and homogeneity, high transmittance as well as good luminescent properties, aiming at the drawbacks that the device lifetime is reduced, the encapsulation process is complex and the cost is high as a result of the easy aging of the epoxy resin for encapsulating the luminescence fluorescent powder; and the color coordinate is unstable and the white light is easy to drift in the prior art.

Another objective of the present invention is to provide a preparation method for rare earth ion doped silicate luminescence glass which is simple and with low cost.

According to an aspect, a rare earth ion doped silicate luminescence glass is provided, which is a material with following general formula: aM₂O·bM'₂O₃·cSiO₂·dRE₂O₃, wherein M is at least one selected from a group of Na, K and Li, M' is at least one selected from a group of Y, Gd, La, Sc and Lu, RE is at least one selected from a group of Ce, Tm, Tb, Ho, Dy, Er, Nd, Sm, Eu and Pr, and a, b, c and d represent mole fraction, ranges of which are respectively 25∼50, 0∼40, 30∼70 and 0.001∼20.

In the rare earth ion doped silicate luminescence glass, a preferably has a range of 30∼45, b preferably has a range of 5∼30, c preferably has a range of 30∼60, and d preferably has a range of 0.1∼20 respectively.

According to an aspect, a preparation method for rare earth ion doped silicate luminescence glass is provided, which comprising following steps: taking components A, B, C and D as raw material, grinding the raw material until mixed uniformly, calcining the raw material for 0.5∼5 h after raising temperature to 1200∼1650 °C then cooling the raw material to room temperature, annealing the raw material for 0.5∼24 h after raising temperature to 600∼1100°C, then cooling the raw material to room temperature again, molding obtained product and then getting the rare earth ion doped silicate luminescence glass; wherein the component A is at least one selected from a group of carbonate of Na, K and Li, the component B is at least one selected from a group of oxide of Y, Gd, La, Sc and Lu, oxalate of Y, Gd, La, Sc and Lu or carbonate of Y, Gd, La, Sc and Lu, the component C is SiO₂, and the component D is at least one selected from a group of oxide of Ce, Tm, Tb, Ho, Dy, Er, Nd, Sm, Eu and Pr, oxalate of Ce, Tm, Tb, Ho, Dy, Er, Nd, Sm, Eu and Pr or carbonate of Ce, Tm, Tb, Ho, Dy, Er, Nd, Sm, Eu and Pr.

The preparation method for rare earth ion doped silicate luminescence glass, further comprises placing the raw material in a mortar, grinding the raw material therein, melting the raw material at 1300∼1600 °C for 1∼3 h in a crucible, pouring out melted frit and cooling the melted frit to room temperature, then placing the melted frit in a tube furnace or low-temperature annealing furnace and annealing the melted frit for 2∼15 h after raising temperature to 650∼900 °C, then cooling the obtained product to room temperature again and obtaining the rare earth ion doped silicate luminescence glass after molding.

In the preparation method for rare earth ion doped silicate luminescence glass, ratio of each raw material is determined in accordance with molar fraction of each element in following general formula: aM₂O·bM'₂O₃·cSiO₂·dRE₂O₃; wherein M is at least one selected from a group of Na, K and Li, M' is at least one selected from a group of Y, Gd, La, Sc and Lu, RE is at least one selected from a group of Ce, Tm, Tb, Ho, Dy, Er, Nd, Sm, Eu and Pr, and a, b, c and d represent mole fraction, ranges of which are respectively 25∼50, 0∼40, 30∼70 and 0.001∼20.

In the preparation method for rare earth ion doped silicate luminescence glass, a preferably has a range of 30∼45, b preferably has a range of 5∼30, the c preferably has a range of 30∼60, and the d preferably has a range of 0.1∼20 respectively.

In the raw material, purities of the oxide, oxalate or carbonate of the component B and D as well as other raw materials are no less than analytic purity.

In the raw material, the component D is preferably at least one selected from a group of oxide of Tm, Tb, Dy, Sm and Eu, oxalate of Tm, Tb, Dy, Sm and Eu or carbonate of Tm, Tb, Dy, Sm and Eu.

In the present invention, specific kinds of rare earth ion are doped into the silicate glass to prepare a new-type luminescence glass. Compared with a powder material, the luminescence glass of the present invention has the following significant advantages when excited by a blue-purple light: (1) good transmittance; (2) good chemical stability and thermostability; (3) simple preparation process and low cost; (4) be easily made into big bulk and different shapes; (5) capable of replacing the epoxy resin. Since these features, the glass capable of achieving a high-performance luminescence is very suitable as the luminescence medium material in the LED lighting field.

The preparation method of the present invention is simple in process and low in cost, and has specific kinds of rare earth ion to be doped selectively, solving the problem that many light-emitting active ions in the glass has very low luminous intensity or even emits no light since the luminescence glass is limited by the glass preparation condition and glass structure.

### BRIEF DESCRIPTION OF THE DRAWINGS

The present invention will be further described with reference to the accompanying drawings and embodiments in the following. In the Figures:
Figure 1 is the emission spectrum of the luminescence glass prepared in the example 1 excited at 359 nm;
Figure 2 is the emission spectrum of the luminescence glass prepared in the example 9 excited at 378 nm;
Figure 3 is the emission spectrum of the luminescence glass prepared in the example 10 excited at 395 nm;
Figure 4 is the emission spectrum of the luminescence glass prepared in the example 12 excited at 350 nm;
Figure 5 is the emission spectrum of the luminescence glass prepared in the example 16 excited at 404 nm;
Figure 6 is the emission spectrum of the luminescence glass prepared in the example 17 excited at 378 nm;
Figure 7 is the emission spectrum of the luminescence glass prepared in the example 20 excited at 353 nm;
wherein the Shimadzu RF-5301 fluorescence spectrometer is used for the emission spectrum determination.

### DETAILED DESCRIPTION OF THE PREFERRED EMBODIMENT

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the drawings, like reference numerals indicate like features; and, a reference numeral appearing in more than one figure refers to the same element.

The present invention will be further explained in detail according to some examples in the following; wherein the raw materials used in each example are common ones in the chemical field or commercial ones.

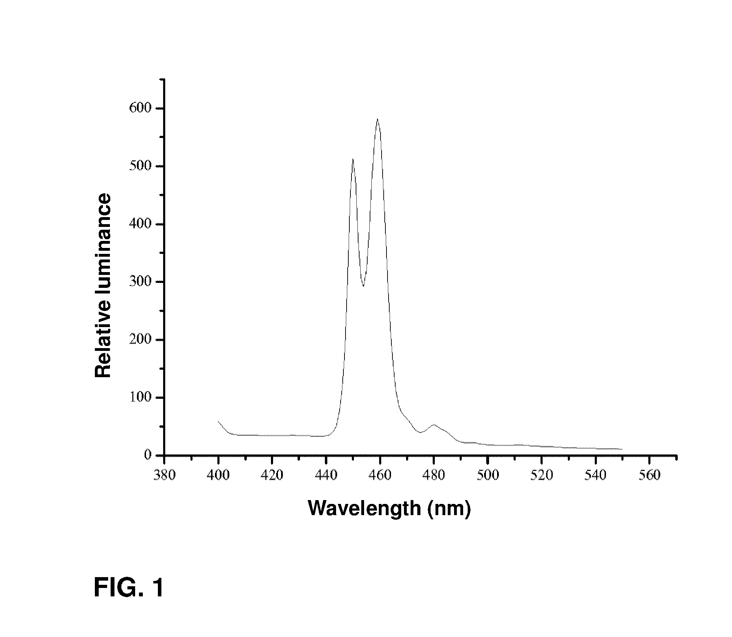

Example 1: Na₂CO₃, SiO₂ of analytic purity as well as Y₂O₃ and Tm₂O₃ of 99.99% are taken as main raw materials. 10.24g Na₂CO₃, 7.13g Y₂O₃, 11.62g SiO₂ and 0.24g Tm₂O₃ are mixed together and the obtained mixture is melted at 1400°C for 2 h. After that the melted frit is poured out, cooled to the room temperature and placed in a low-temperature annealing furnace with temperature raised to 700°C in air atmosphere, and then annealed for 5 h at 700°C. After a molding process, the glass of 30Na₂O·9.8Y₂O₃·60SiO₂·0.2Tm₂O₃ (among it, the coefficient in front of each component means its mole fraction, which is similar hereafter) emitting a blue light is obtained. As shown in Figure 1, it is the emission spectrum of the luminescence glass prepared in the example excited by an ultraviolet light at 359 nm. As shown in Figure 1, the luminescence glass prepared in the example emits a blue light of 455 nm when excited at 359nm.

Example 2: Li₂CO₃, SiO₂ of analytic purity as well as Y₂O₃ and Tm₂O₃ of 99.99% are taken as main raw materials. 8.15g Li₂CO₃, 8.14g Y₂O₃, 13.27g SiO₂ and 0.28g Tm₂O₃ are mixed together and the obtained mixture is melted at 1350°C for 2 h. After that the melted frit is poured out, cooled to the room temperature and placed in a low-temperature annealing furnace with temperature raised to 600°C in air atmosphere, and then annealed at 600°C for 8 h. After a molding process, the glass of 30Li₂O·9.8Y₂O3·60SiO₂·0.2Tm₂O₃ emitting a blue light is obtained.

Example 3: K₂CO₃, SiO₂ of analytic purity as well as Y₂O₃ and Tm₂O₃ of 99.99% are taken as main raw materials. 11.88g K₂CO₃, 6.34g Y₂O₃, 10.33g SiO₂ and 0.22g Tm₂O₃ are mixed together and the obtained mixture is melted at 1450°C for 2 h. Then the melted frit is poured out, cooled to the room temperature and placed in a low-temperature annealing furnace with temperature raised to 800°C in air atmosphere, and then annealed at 800°C for 4 h. After a molding process, the glass of 30K₂O·9.8Y₂O3·60SiO₂·0.2Tm₂O₃ emitting a blue light is obtained.

Example 4: K₂CO₃, SiO₂ of analytic purity as well as Lu₂O₃ and Tm₂O₃ of 99.99% are taken as main raw materials. 9.95g K₂CO₃, 9.36g Lu₂O₃, 8.65g SiO₂ and 0.18g Tm₂O₃ are mixed together and the obtained mixture is melted at 1500°C for 1 h. Then the melted frit is poured out, cooled to the room temperature and placed in a low-temperature annealing furnace with temperature raised to 1100°C in air atmosphere, and then annealed at 1100°C for 0.5 h. After a molding process, the glass of 30K₂O·9.8Lu₂O₃·60SiO₂·0.2Tm₂O₃ emitting a blue light is obtained.

Example 5: Li₂CO₃, SiO₂ of analytic purity as well as Gd₂O₃ and Tm₂O₃ of 99.99% are taken as main raw materials. 6.81g Li₂CO₃, 10.92g Gd₂O₃, 11.08g SiO₂ and 0.23g Tm₂O₃ are mixed together and the obtained mixture is melted at 1400°C for 2 h. Then the melted frit is poured out, cooled to the room temperature and placed in a low-temperature annealing furnace with temperature raised to 650°C in air atmosphere, and then annealed at 650°C for 15 h. After a molding process, the glass of 30Li₂O·9.8Gd₂O₃·60SiO₂· 0.2Tm₂O₃ emitting a blue light is obtained.

Example 6: Na₂CO₃, SiO₂ of analytic purity as well as La₂O₃ and Tm₂O₃ of 99.99% are taken as main raw materials. 9.09g Na₂CO₃, 9.13g La₂O₃, 10.31g SiO₂ and 0.22g Tm₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8La₂O₃·60SiO₂·0.2Tm₂O₃ emitting a blue light is obtained.

Example 7: Na₂CO₃, SiO₂ of analytic purity as well as Sc₂O₃ and Tm₂O₃ of 99.99% are taken as main raw materials. 11.52g Na₂CO₃, 4.9g Sc₂O₃, 13.07g SiO₂ and 0.27g Tm₂O₃ are mixed together and the obtained mixture is melted at 1450°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8Sc₂O₃·60SiO₂·0.2Tm₂O₃ emitting a blue light is obtained.

Example 8: Na₂CO₃, SiO₂ of analytic purity as well as Y₂O₃ and CeO₂ of 99.99% are taken as main raw materials. 10.22g Na₂CO₃, 6.89g Y₂O₃, 11.59g SiO₂ and 0.55g CeO₂ are mixed together and the obtained mixture is melted at 1450°C for 5 h. Then the melted frit is poured out, cooled to the room temperature and placed in a tube furnace with temperature raised to 750°C in a reductive atmosphere of 95% N₂ + 5% H₂ (volume percentage, similarly hereinafter), and then annealed at 750°C for 15 h. After a molding process, the luminescence glass of 30Na₂O· 9.5Y₂O₃· 60SiO₂· 0.5Ce₂O₃ is obtained.

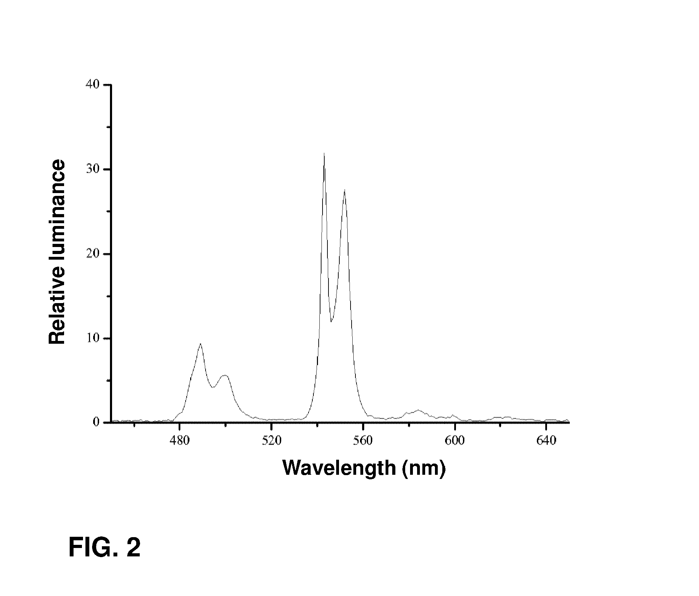

Example 9: Na₂CO₃, SiO₂ of analytic purity as well as Y₂O₃ and Tb₄O₇ of 99.99% are taken as main raw materials. 9.59g Na₂CO₃, 4.08g Y₂O₃, 10.88g SiO₂ and 4.51g Tb₄O₇ are mixed together and the obtained mixture is melted at 1400°C for 2 h. Then the melted frit is poured out, cooled to the room temperature and placed in a tube furnace with temperature raised to 700°C in a reductive atmosphere of 95% N₂+5% H₂ (volume percentage), and then annealed at 700°C for 5 h. After a molding process, the glass of 30Na₂O·6Y₂O₃·60SiO₂.4Tb₂O₃ emitting a green light is obtained. As shown in Figure 2, it is the emission spectrum of the luminescence glass prepared in the example excited by an ultraviolet light at 378 nm. As shown in Figure 2 the luminescence glass prepared in the example emits a green light of 544 nm when excited at 378nm.

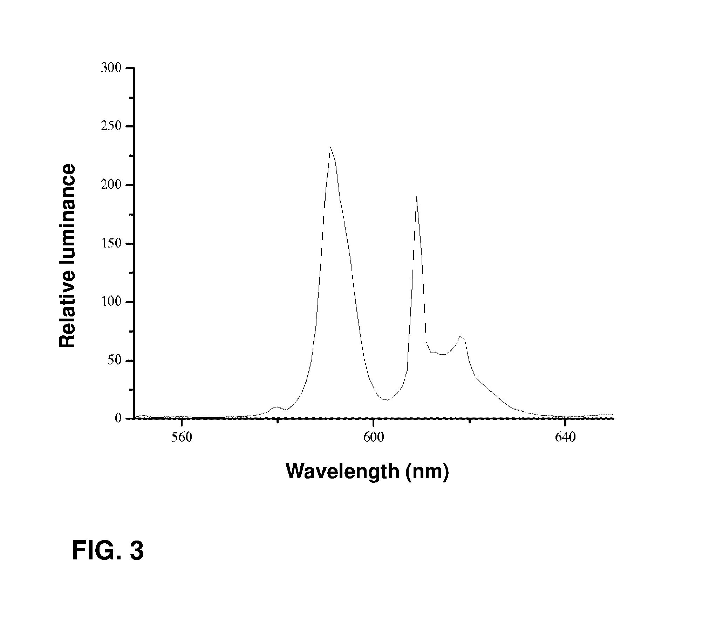

Example 10: Na₂CO₃, SiO₂ of analytic purity as well as Y₂O₃ and Eu₂O₃ of 99.99% are taken as main raw materials. 9.81g Na₂CO₃, 4.87g Y₂O₃, 11.12g SiO₂ and 3.25g Eu₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·7Y₂O₃·60SiO₂·3Eu₂O₃ emitting a green light is obtained. As shown in Figure 3, it is the emission spectrum of the luminescence glass prepared in the example excited by an ultraviolet light at 395 nm. As shown in Figure 3, the luminescence glass prepared in the example emits a red light of 612 nm when excited at 395nm.

Example 11: Na₂CO₃, SiO₂ of analytic purity as well as Y₂O₃ and Ho₂O₃ of 99.99% are taken as main raw materials. 10.25g Na₂CO₃, 7.13g Y₂O₃, 11.62g SiO₂ and 0.24g No₂O₃ are mixed together and the obtained mixture is melted at 1400°C for 2 h. Then the melted frit is poured out, cooled to the room temperature and placed in a low-temperature annealing furnace with temperature raised to 600°C in air atmosphere, and then annealed at 600°C for 24 h. After a molding process, the glass of 30Na₂O·9.8Y₂O₃·60SiO₂·0.2Ho₂O₃ emitting a green light is obtained.

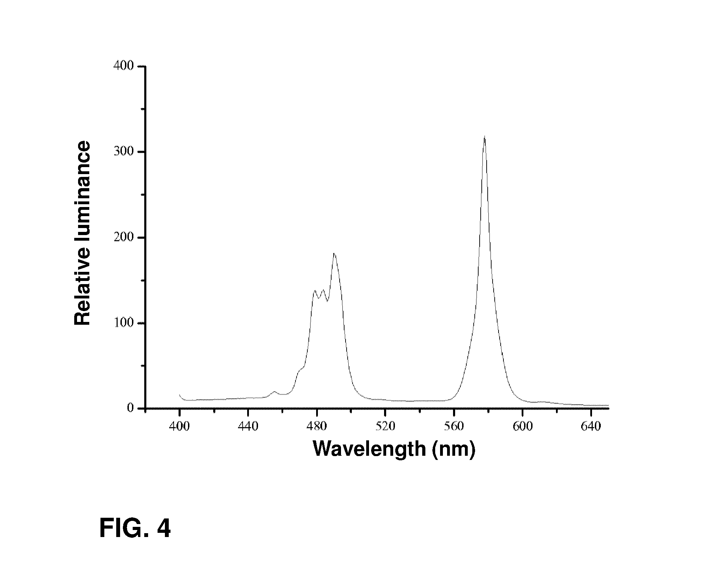

Example 12: Na₂CO₃, SiO₂ of analytic purity as well as Y₂O₃ and Dy₂O₃ of 99.99% are taken as main raw materials. 10.24g Na₂CO₃, 7.13g Y₂O₃, 11.62g SiO₂ and 0.24g Dy₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8Y₂O₃·60SiO₂·0.2Dy₂O₃ emitting white light is obtained. As shown in Figure 4, it is the emission spectrum of the luminescence glass prepared in the example excited by an ultraviolet light at 350 nm. As shown in Figure 4, the luminescence glass prepared in the example emits a blue light of 485 nm and a yellow light of 578 nm when excited at 350nm, thus a white light-emitting is achieved by their combination.

Example 13: Na₂CO₃, SiO₂ of analytic purity as well as Y₂O₃ and Er₂O₃ of 99.99% are taken as main raw materials. 10.24g Na₂CO₃, 7.13g Y₂O₃, 11.62g SiO₂ and 0.24g Er₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8Y₂O₃·60SiO₂·0.2Er₂O₃ emitting a green light is obtained.

Example 14: Na₂CO₃, SiO₂ of analytic purity as well as Y₂O₃ and Nd₂O₃ of 99.99% are taken as main raw materials. 10.25g Na₂CO₃, 7.14g Y₂O₃, 11.63g SiO₂ and 0.21g Nd₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8y₂O₃·6OSiO₂·0.2Nd₂O₃ emitting yellow-green light is obtained.

Example 15: Na₂CO₃, SiO₂ of analytic purity as well as Y₂O₃ and Pr₆O₁₁ of 99.99% are taken as main raw materials. 10.26g Na₂CO₃, 7.14g Y₂O₃, 11.63g SiO₂ and 0.21g Pr₆O₁₁ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O·9.8Y₂O₃.60SiO₂.0.2Pr₂O₃ emitting a red light is obtained.

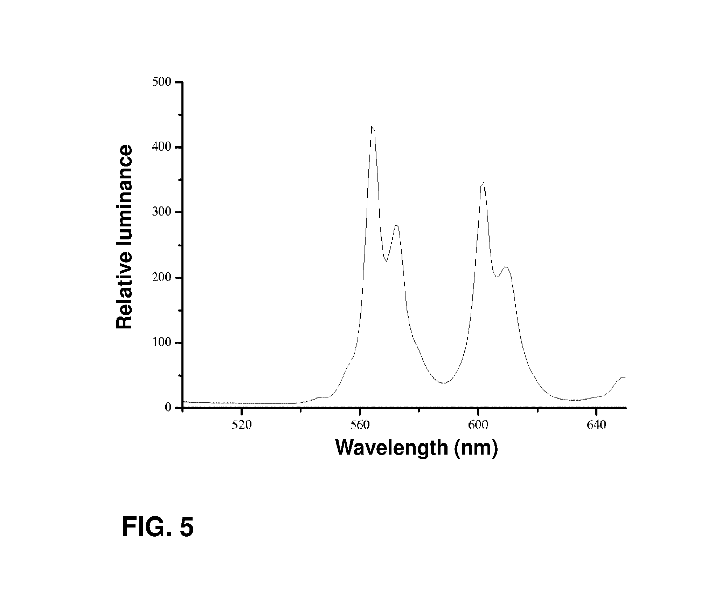

Example 16: Na₂CO₃, SiO₂ of analytic purity as well as Y₂O₃ and Sm₂O₃ of 99.99% are taken as main raw materials. 10.25g Na₂CO₃, 7.14g Y₂O₃, 11.63g SiO₂ and 0.22g Sm₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O.9.8Y₂O₃·60SiO₂·0.2Sm₂O₃ emitting a red light is obtained. As shown in Figure 5, it is the emission spectrum of the luminescence glass prepared in the example excited by a purple light at 404 nm. As shown in Figure 5, the luminescence glass prepared in the example emits a yellow light of 565 nm and a red light of 601 nm when excited at 404nm.

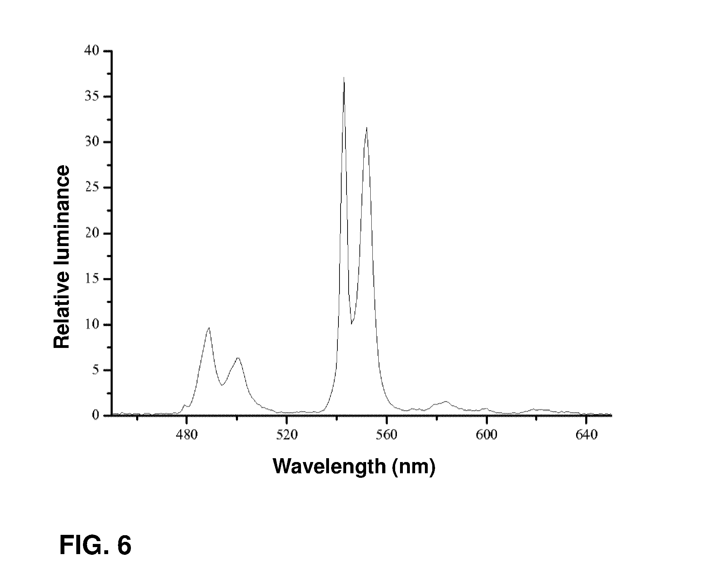

Example 17: Na₂CO₃, SiO₂ of analytic purity as well as Y₂O₃ and Tb₄O₇ of 99.99% are taken as main raw materials. 9.28g Na₂CO₃, 2.63g Y₂O₃, 10.52g SiO₂ and 6.54g Tb₄O₇ are mixed together and the obtained mixture is melted at 1400°C for 2 h. Then the melted frit is poured out, cooled to the room temperature and placed in a tube furnace with temperature raised to 700°C in a reductive atmosphere of 95% N₂+5% H₂ (volume percentage), and then annealed at 700°C for 5 h. After a molding process, the glass of 30Na₂O·4Y₂O₃·60SiO₂·6Tb₂O₃ emitting a green light is obtained. As shown in Figure 6, which illustrates the emission spectrum of the luminescence glass prepared in the example excited by an ultraviolet light at 378 nm. As shown in Figure 6, the luminescence glass prepared in the example emits a green light of 544 nm when excited at 378nm.

Example 18: Na₂CO₃, SiO₂ of analytic purity as well as Y₂O₃ and Eu₂(C₂O₄)₃ of 99.99% are taken as main raw materials. 6.11g Na₂CO₃, 10.42g Y₂O₃, 6.93g SiO₂ and 6.55g Eu₂(C₂O₄)₃ are mixed together and the obtained mixture is melted at 1500°C for 1 h. Then the melted frit is poured out, cooled to the room temperature and placed in a low-temperature annealing furnace with temperature raised to 800°C in air atmosphere, and then annealed at 800°C for 5 h. After a molding process, the glass of 25Na₂O·20Y₂O₃·50SiO₂·5Eu₂O₃ emitting a red light is obtained.

Example 19: Na₂CO₃, SiO₂ of analytic purity as well as Y₂(CO₃)₃ and Eu₂(CO₃)₃ of 99.99% are taken as main raw materials. 12.53g Na₂CO₃, 5.68g Y₂(CO₃)₃, 11.39g SiO₂ and 3.68g Eu₂(CO₃)₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 35.7Na₂O**·**4.8Y₂O₃**·**57**.**2SiO₂**·**2.3Eu₂O₃ emitting a red light is obtained.

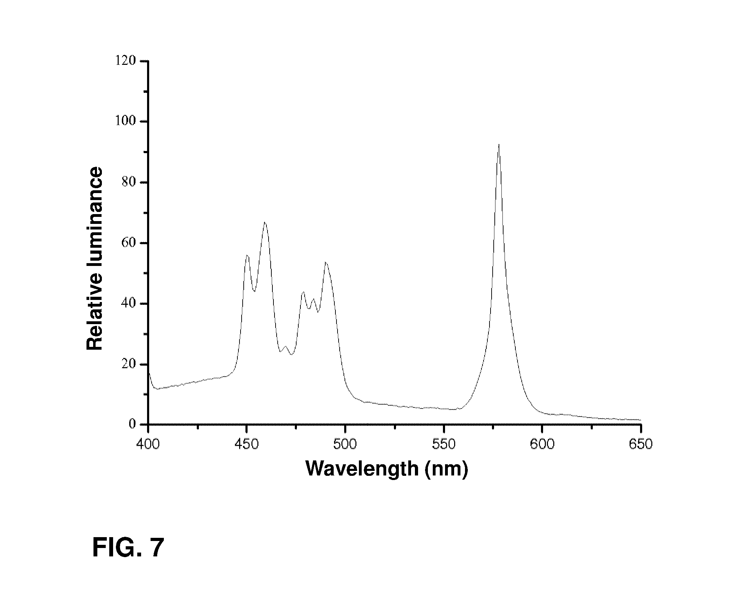

Example 20: Na₂CO₃, SiO₂ of analytic purity as well as Y₂O₃, Tm₂O₃ and Dy₂O₃ of 99.99% are taken as main raw materials. 10.22g Na₂CO₃, 7.04g Y₂O₃, 11.6g SiO₂, 0.12g Tm₂0₃ and 0.24g Dy₂O₃ are mixed together and the obtained mixture is melted at 1400°C for 2 h. Then the melted frit is poured out, cooled to the room temperature and placed in a low-temperature annealing furnace with temperature raised to 700°C in air atmosphere, and then annealed at 700°C for 5 h. After a molding process, the glass of 30Na₂O**·**9.7Y₂O₃**·**60SiO₂**·**0.1Tm₂O₃**·**0.2Dy₂O₃ emitting white light is obtained. As shown in Figure 7, it is the emission spectrum of the luminescence glass prepared in the example excited by an ultraviolet light at 353 nm. As shown in Figure 7, the luminescence glass prepared in the example emits lights of 460 nm, 490 nm and 578 nm when excited by an ultraviolet light at 353 nm, and a white light is obtained through their combination.

Example 21: Na₂CO₃, K₂CO₃, Li₂CO₃, SiO₂ of analytic purity as well as Y₂(C₂O₄)₃, Gd₂(C₂O₄)₃ and Tb₄O₇ of 99.99% are taken as main raw materials. 2.86g Na₂CO₃, 3.49g K₂CO₃, 2.37g Li₂CO₃, 9.6g Y₂(C₂O₄)₃, 13.08g Gd₂(C₂O₄)₃, 5.33g SiO₂ and 1.57g Tb₄O₇ are mixed together and the obtained mixture is melted at 1300°C for 3 h. Then the melted frit is poured out, cooled to the room temperature and placed in a reductive atmosphere and then annealed at 1050°C for 2.5 h, wherein the volume ratio of the nitrogen and hydrogen in the reducing atmosphere is 95:5. After a molding process, the glass of 12.2Na₂O**·** 11.4K₂O**·** 14.5Li₂O**·**9.8Y₂O₃**·** 10.2Gd₂O₃**·**40SiO₂**·**1.9Tb₂O₃ emitting a green light is obtained.

Example 22: Na₂CO₃, SiO₂ of analytic purity as well as Gd₂O₃ and Pr₂(C₂O₄)₃, of 99.99% are taken as main raw materials. 6.72g Na₂CO₃, 17.23g Gd₂O₃, 6.67g SiO₂ and 0.01g Pr₂(C₂O₄)₃ are mixed together and the obtained mixture is melted at 1420°C for 10 h. Then the melted frit is poured out, cooled to the room temperature and placed in a low-temperature annealing furnace with temperature raised to 700°C in air atmosphere, and then annealed at 900°C for 8 h. After a molding process, the glass of 40Na₂O**·**30Gd₂O₃·70SiO₂**·**0.001Pr₂O₃ emitting a red light is obtained.

Example 23: Na₂CO₃, SiO₂ of analytic purity as well as La₂(CO₃)₃, Sc₂(CO₃)₃, Eu₂(CO₃)₃ and Sm₂(CO₃)₃ of 99.99% are taken as main raw materials. 8.80g Na₂CO₃, 6.1g SiO₂, 1.69g La₂(CO₃)₃, 1.49g S_{C2}(CO₃)₃, 4.47g Eu₂(CO₃)₃ and 17.74g Sm₂(CO₃)₃ are mixed together and the obtained mixture is melted at 1650°C for 0.5 h. Then the melted frit is poured out, cooled to the room temperature and placed in a low-temperature annealing furnace with temperature raised to 880°C in air atmosphere, and then annealed at 880°C for 7 h. After a molding process, the glass of 45Na₂O·2La₂O₃·3Sc₂O₃·5Eu₂O₃·55SiO₂·20Sm₂O₃ emitting a red light is obtained.

Example 24: K₂CO₃, SiO₂ of analytic purity as well as Lu₂(C₂O₄)₃ and Pr₆O₁₁, of 99.99% are taken as main raw materials. 12.36g K₂CO₃, 8.58g Lu₂(C₂O₄)₃, 10.91g SiO₂ and 0.09g Pr₆O₁₁ are mixed together and the obtained mixture is melted at 1200°C for 5 h. Then the melted frit is poured out, cooled to the room temperature and placed in a low-temperature annealing furnace with temperature raised to 700°C in air atmosphere, and then annealed at 700°C for 5 h. After a molding process, the glass of 32K₂O·5Lu₂O₃·65SiO₂·0.1Pr₂O₃ emitting a red light is obtained.

Example 25: Na₂CO₃, SiO₂ of analytic purity and Tb₄O₇ of 99.99% are taken as main raw materials. 7.04g Na₂CO₃, 7.84g SiO₂ and 13.31g Tb₄O₇ are mixed together and the obtained mixture is melted at 1300°C for 4 h. Then the melted frit is poured out, cooled to the room temperature and placed in a low-temperature annealing furnace with temperature raised to 700°C in air atmosphere, and then annealed at 700 °C for 5 h. After a molding process, the glass of 28Na₂O·55SiO₂·15Tb₂O₃ emitting a green light is obtained.

Example 26: Li₂CO₃, SiO₂ of analytic purity as well as Y₂O₃ and Tb₄O₇ of 99.99% are taken as main raw materials. 11.01g Li₂CO₃, 5.37g SiO₂, 26.91g Y₂O₃ and 0.11g Tb₄O₇ are mixed together and the obtained mixture is melted at 1600°C for 1 h. Then the melted frit is poured out, cooled to the room temperature and placed in a low-temperature annealing furnace with temperature raised to 800°C in air atmosphere, and then annealed at 800°C for 5 h. After a molding process, the glass of 50Li₂O·40Y₂O₃·30SiO₂·0.1Tb₂O₃ emitting a green light is obtained.

## Claims

1. A rare earth ion doped silicate luminescence glass, which is a material with following general formula: aM₂O·bM'₂O₃·cSiO₂·dRE₂O₃, wherein M is at least one selected from a group of Na, K and Li, M' is at least one selected from a group of Y, Gd, La, Sc and Lu, RE is at least one selected from a group of Ce, Tm, Tb, Ho, Dy, Er, Nd, Sm, Eu and Pr, and a, b, c and d represent mole fraction, ranges of which are respectively 25∼50, 0∼40, 30∼70 and 0.001∼20.

2. The rare earth ion doped silicate luminescence glass according to claim 1, wherein a has a range of 30∼45, b has a range of 5∼30, c has a range of 30∼60, and d has a range of 0.1∼20 respectively.

3. A preparation method for rare earth ion doped silicate luminescence glass, which comprises following steps: taking components A, B, C and D as raw material, grinding the raw material until mixed uniformly, calcining the raw material for 0.5∼5 h after raising temperature to 1200∼1650 °C then cooling the raw material to room temperature, annealing the raw material for 0.5∼24 h after raising temperature to 600∼1100 °C , then cooling the raw material to room temperature again, molding obtained product and then getting the rare earth ion doped silicate luminescence glass; wherein the component A is at least one selected from a group of carbonate of Na, K and Li, the component B is at least one selected from a group of oxide of Y, Gd, La, Sc and Lu, oxalate of Y, Gd, La, Sc and Lu or carbonate of Y, Gd, La, Sc and Lu, the component C is SiO₂, and the component D is at least one selected from a group of oxide of Ce, Tm, Tb, Ho, Dy, Er, Nd, Sm, Eu and Pr, oxalate of Ce, Tm, Tb, Ho, Dy, Er, Nd, Sm, Eu and Pr or carbonate of Ce, Tm, Tb, Ho, Dy, Er, Nd, Sm, Eu and Pr.

4. The preparation method for rare earth ion doped silicate luminescence glass according to claim 3, further comprising placing the raw material in a mortar, grinding the raw material therein, melting the raw material at 1300~1600 °C for 1∼3 h in a crucible, pouring out melted frit and cooling the melted frit to room temperature, then placing the melted frit in a tube furnace or low-temperature annealing furnace and annealing the melted frit for 2∼15 h after raising temperature to 650∼900 °C, then cooling the obtained product to room temperature again and obtaining the rare earth ion doped silicate luminescence glass after molding.

5. The preparation method for rare earth ion doped silicate luminescence glass according to claim 3 or 4, wherein ratio of each raw material is determined in accordance with molar fraction of each element in following general formula: aM₂O·bM'₂O₃·cSiO₂·dRE₂O₃; wherein M is at least one selected from a group of Na, K and Li, M' is at least one selected from a group of Y, Gd, La, Sc and Lu, RE is at least one selected from a group of Ce, Tm, Tb, Ho, Dy, Er, Nd, Sm, Eu and Pr, and a, b, c and d represent mole fraction, ranges of which are respectively 25∼50, 0∼40, 30∼70 and 0.001∼20.

6. The preparation method for rare earth ion doped silicate luminescence glass according to claim 5, wherein a has a range of 30∼45, b has a range of 5∼30, c has a range of 30∼60, and d has a range of 0.1∼20 respectively.

7. The preparation method for rare earth ion doped silicate luminescence glass according to claim 6, wherein in said raw material, purities of the oxide, oxalate or carbonate of the component B and D as well as other raw materials are no less than analytic purity.

8. The preparation method for rare earth ion doped silicate luminescence glass according to claim 7, wherein in said raw material, said component D is at least one selected from a group of oxide of Tm, Tb, Dy, Sm and Eu, oxalate of Tm, Tb, Dy, Sm and Eu or carbonate of Tm, Tb, Dy, Sm and Eu.
